# EUROPEAN PATENT SPECIFICATION

(11) **EP 1 211 841 B1**
(45) Date of publication and mention of the grant of the patent: **11.01.2006**
(21) Application number: 01943551.0
(22) Date of filing: 22.06.2001
(51) Int. Cl.: H04L 9/32, G06F 1/00

(54) **EXTERNAL SIGNATURE DEVICE FOR A PC WITH OPTICAL DATA INPUT VIA THE MONITOR**
EXTERNE SIGNATURVORRICHTUNG FÜR PC MIT OPTISCHER DATENEINGABE ÜBER DEN MONITOR
DISPOSITIF DE SIGNATURE EXTERNE POUR ORDINATEUR PERSONNEL A ENTREE OPTIQUE DE DONNEES VIA LE MONITEUR

(30) Priority: 23.06.2000 ES 200001646
(43) Date of publication of application: 05.06.2002
(73) Proprietor: Esignus, S.L., 20009 San Sebastian (ES)
(72) Inventor: DE LA PUENTE ARRATE, Fernando, E-35016 Las Palmas de Gran Canaria (ES); SANDOVAL GONZALEZ, Juan, Domingo, E-35011 Las Palmas de Gran Canaria (ES)
(74) Representative: Carpintero Lopez, Francisco
(86) International application number: PCT/ES2001/000250
(87) International publication number: WO 2002/001793

(56) References cited:
- EP-A1- 1 055 989
- EP-A1- 1 056 014
- DE-A1- 19 811 720

## Description

### OBJECT OF THE INVENTION

The present invention relates to an external signature device for a PC with optical data input via the monitor, which provides fundamental novelty characteristics and substantial advantages with respect to methods known and used for these same purposes in the current state of the art.

More specifically, the invention teaches a universal signature device which can be used in combination with the monitor of any computer, and by which the user is provided with an appropriate transmission of the data to be signed directly from the monitor display without requiring any additional installation or configuration. The system provides highly increased operational security characteristics, since as it is not re-programmable it is immune to possible attacks from viruses or other harmful software, as well as allowing the use of alphanumeric characters by the user.

The field of application of the invention obviously lies in the industrial sector of manufacturing and/or installation of computer and communications systems and devices for carrying out e-commerce transactions.

### BACKGROUND OF THE INVENTION

In the present state of the art, the remote execution of monetary (or any other) transactions has the disadvantage of a possible undesired supplanting of identities. For this reason mechanisms must be introduced to allow authentication of the user's identity in a secure manner. A method often used hitherto is to employ a user name and a password which the user must provide to the other end before beginning to operate. This information is sent encrypted so that only the intended recipient can obtain the password. The problem with this authentication system is that as the same password is always used, it is relatively easy to attack. A more robust authentication system consists of the use of an electronic signature. The incorporation of electronic signatures into e-commerce operations implies an important improvement in security, as no longer is a single authentication key used for any document, but instead a different signature is generated for each one. This signature is a function of the user (of the signature key possessed by the user) and of each document. This means that even if an attacker were to intercept a document with its signature, it is not possible to generate the corresponding signature for a different document. There are two different types of signature depending on the type of encryption used: symmetric or asymmetric.

In symmetric encrypting the same key is used to sign and to verify the signature. This means that both the person signing and the person verifying the signature must share the signature key. Thus, only they can sign or verify the documents. This type of digital signature is currently widespread, but problems may arise if it is required at some point for someone else to verify the signature, as this would require to communicate the signature/verification key.

In asymmetric encryption two complementary keys are used, one for signing and another for verifying, so that what is signed with one key can be verified by the other. Having two keys allows to keep one secret (the signature key) and to make the other public (the verification key). Furthermore, if an authentication before someone is desired it is possible to sign a block of data with the signature key so that anyone may verify it using the verification key.

However, these systems are secure as long as the key management is proper, that is, keys are stored beyond the access of any attackers and the method of publicizing the verification keys ensures their integrity. If signature keys are stored in files in computers, there is a risk of somebody illegally accessing these data and copying them without our knowledge, whether locally or remotely by using a virus.

Smart cards solve this problem by isolating the signature keys in a device external to the computer, so that the keys cannot be extracted from the card, and it is only possible to send data for its signature. This is a significant advance as it ensures that the signature key can never be stolen.

However, even smart cards can be attacked, although in this case the attack must be more sophisticated. This would imply the use of a virus or Trojan to give commands to the card while it is activated without the use noticing anything unusual.

All of this could lead to the conclusion that computers cannot be relied on for electronic signatures, whether directly when having signature keys in their hard disk or by using smart cards. In order to make the signature system secure it is necessary to use non re-programmable and reliable hardware which allows to view the data to be signed and which requires the interaction of the user to perform the signature operations.

DE-A-19811720 discloses a system in which a computer and an external output unit are complemented with a security module for calculating a digital signature using a secret key. The purpose is to allow the user to be sure that he signs only what he intends to sign.

### SUMMARY OF THE INVENTION

The invention comprises a device as defined in claim 1. Preferred embodiments are defined in the dependent claims.

The system associated to the device described herein extends the functionality of smart cards, allowing users to view the data before signing them for purposes of verification, preventing the users from signing data which they do not wish to sign. Thereby, this device substantially improves the security of systems which rely on electronic signatures, and is immediately applicable to e-banking and e-commerce.

However, the use of an external device that is non re-programmable and allows to view the data to be signed solves the security issues but adds the need for a mechanism used to enter the data to be signed, as well as to send the resulting signature to the computer. One possible solution is to require the user to enter manually the data to be signed using the keyboard of this external device, which will generate the signature and show it in the display so that the user can key it in the computer. This means that the user must enter the same data twice, first in the computer and then in the signer, which is often inefficient, particularly when the signer keyboard is small and inconvenient. It would also be possible to use a connection between the signer device and the computer, so that the user would only have to ensure the integrity of the data and order the generation of their signature. However, this implies an added complication if the signer is to have a universal use.

The device object of this description is characterized by simultaneously solving all of the aforementioned problems with a device that is easy to use, is non re-programmable, allows viewing the data to be signed and has a data input system which allows it to read the data to be signed directly from the monitor of any computer. As all computers have a monitor we can consider this system to be universal and to not require any additional installation or configuration. Once the data have been transmitted and the signature generated, the user must enter the signature manually in the computer, which involves keying in about five characters.

Both the optical data input and the manual entering allow to choose the currency for the financial amounts of the document. A bank transfer instruction, for example, can be made in one of several available currencies.

The signing device has several signature keys. Each key is associated to a verification authority. Thus, the same device can be used to authenticate the user and to sign documents for several mutually independent entities. For example, key 0 can be used to authenticate the user's company, key 1 for Internet banking orders, key 2 for broker instructions for share transactions over the Internet, etc.

The currently existing device which is most similar to that of the object of this patent application is the VASCO Digipass system. This system is unlike the one herein described in that the Digipass system does not support the reception and processing of alphanumeric documents, the use of several currencies for the monetary units and selection of a signature key among various available ones. In addition, the VASCO Digipass system is re-programmable, which makes it vulnerable to possible attacks.

In an example of a preferred embodiment, the device of the invention comprises four essential components:
- An optical data reception system, which allows it to receive data from any computer monitor (CRT, TFT or any other display technology);
- An alphanumerical display which allows to view these data, as well as the menus for device options;
- A keyboard that allows the user to interact with the device (entering the PIN, using the data viewing menus and accepting or canceling the signature generation);
- A device configuration system which allows to define the activation PIN, the default currency, the language for messages shown to the user and the default signature key, and
- the signing device that processes signing operations of the received data.

### BRIEF DESCRIPTION OF THE DRAWINGS

These and other characteristics and advantages of the invention will be made clearer in view of the detailed description which follows of a preferred embodiment, given for purposes of illustration only and as a non-limiting example, which makes reference to the accompanying drawing in which:
Figure 1 shows a schematic representation of the external signing device in accordance with the invention;
Figure 2 shows a block diagram illustrating the process followed by the device of the invention;
Figure 3 is a simplified representation of the shape of a signal received from a CRT monitor after filtering out the high frequency components;
Figure 4 shows the shape of the signal received from a TFT monitor, and
Figure 5 shows a schematic representation of the process related to the encryption of the private key used to implement the electronic signature.

### DESCRIPTION OF A PREFERRED EMBODIMENT

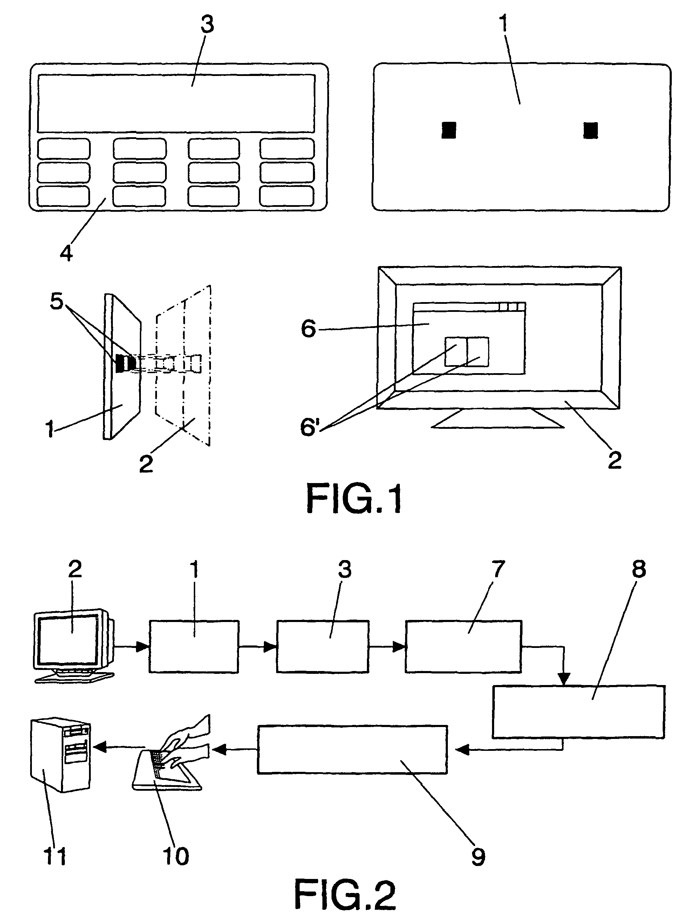

The detailed description of the preferred embodiment of the invention will be made with reference to the accompanying drawings, in which Figure 1 shows the generic design for the external signer. In this representation the device is seen to include an optical data reception system (1), in which are incorporated the photo-detectors (5) meant to detect the optical signals sent by the monitor (2), with the label (6) indicating the specific transmission area from said monitor, which monitor may be of any known type (CRT, TFT or whichever other display technology); on its part, the alphanumerical display is shown with the label (3), while the keyboard is labeled (4). The signature system meant to process the signing operations for the received data has not been explicitly shown.

The signing procedure used by this device is schematically represented in the block diagram of figure 2. Firstly the signer is activated by entering a PIN on keyboard (4), then transmitting the data to be signed from the computer (11) to the signer via the monitor (2). When the data have been correctly received they are shown on the display (3) of the signer so that the user can ensure that they are correct. If so, the user will instruct the signature in the user validation stage 7, by pressing the corresponding keyboard key, and the signature generated in the following stage 8 will be shown on the display in the stage 9. This signature consists of alphanumerical characters which the user must enter manually in the computer (11) using its keyboard (10).

To facilitate its ease of use the signer is provided with a configuration application that allows to change the parameters. The configurable parameters are the following:
- PIN. The unit activation PIN may be changed.
- Language. A language can be chosen from among the four programmed ones (Basque, Catalan, English and Spanish).
- Default currency. When data are entered through the keyboard, this is the currency used if none is entered. Possible values are: Peseta, Euro, Dollar and Pound.
- Default key. When data are entered with the keyboard this is the key used if no other is entered.

In accordance with the above the actual implementation of the system is as follows:

The optical data reception is effected by the computer (11), which executes a program that converts the data to be signed into changes in luminosity or color of an area (6) of the screen of monitor (2). Transmission of a data bit is effected by the change in color of said transmission area (6) of the screen, so that in this embodiment the color black is equivalent to transmitting a zero while the color white represents a one.

However, when using multitask operative systems it must be considered that the computer is shared by several processes, some at an application level and others at an operative system level. This means that it is not possible to ensure that the program is executed synchronously, so that the time in which a bit is shown on the screen may vary greatly. This implies a degree of uncertainty when the color of the transmission area (6) does not change for several consecutive cycles, as this could imply two things: that transmission is being made of a sequence of several bits at zero or several bits at one, or that the process administrator of the operative system has passed control of the processor to another process, in which case the transmission is suspended until the transmitting process recovers control of the processor. In order to solve this problem a clock signal must also be generated which informs the signer when to sample the signal to recover a bit.

The solution involves the use of two different screen areas, labeled D (right) and I (left), which are clearly shown on the monitor (2) in figure 1, and labeled as (6'). The square D is used to transit data, while the square I is used to send a synchronism sequence which allows to distinguish inactive states and the transmission of several repeated bits. Therefore, the reception system requires two photo-detectors (5), one to read the data transmitted by the square D and another to receive a synchronism sequence. Each of these inputs has an RC filter (not shown) which eliminates the high frequency components of the signal sue to the horizontal sweeping in CRT monitors.

Another important aspect is the possibility of working with any type of monitor, regardless of the technology employed. These technologies can be divided into two large groups: a) a first group in which the image is updated at regular intervals (refresh cycle), and b) a second group in which the signal remains unchanged until the image to be shown changes color. In the first group (CRT monitors) the signal received consists of a main component with a low frequency (screen refresh frequency) and an added high frequency component due to the horizontal sweeping of the cathode rays across the screen. On the contrary, the signal received from a TFT monitor is stable throughout the entire bit time, with only a positive or negative gradient appearing in the transitions from a zero to a one and vice versa. Additionally, as the signal remains constant throughout an entire bit it is observed that the instantaneous intensity is lower than in CRT's, in which the intensity is concentrated in a brief time interval, shorter than the refresh cycle. This leads to the need to treat each case independently, for which in first place must be considered the type of monitor which transmits the data. For this an initial three bit sequence is used (111) translated into the sequence (W,W) (W,B) (W,W).

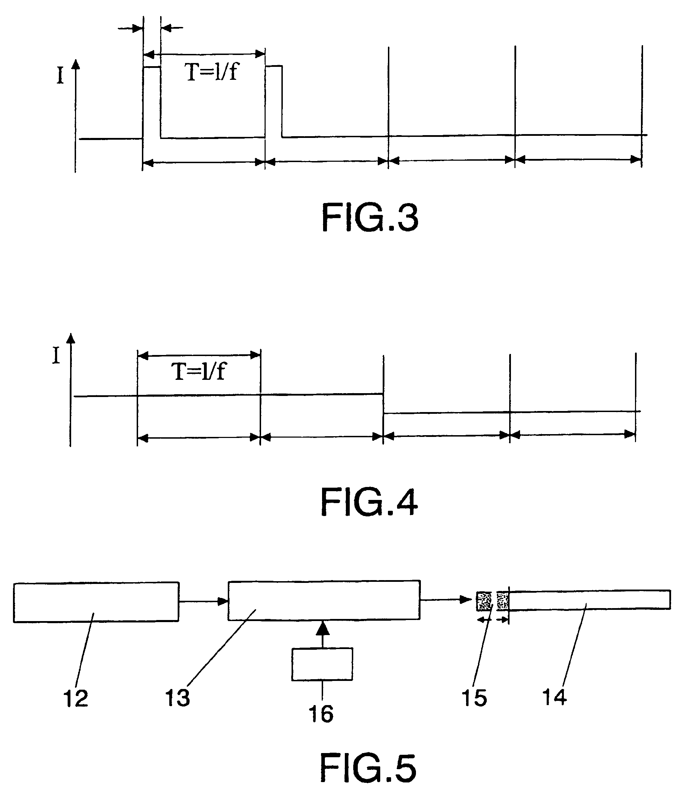

Figure 3 shows a simplification of the appearance of the signal received from a CRT monitor, after the high frequency components have been filtered. In the graph shown in the figure the light intensity (I) is shown on the ordinate axis as a function of the time (t), with the first cycles corresponding to the color white and the second two to the color black. In the first two cycles corresponding to the color white the increase can be seen of the level of light intensity during one part of the refresh cycle period, in which the persistence of color is verified..

On its part, figure 4 shows the form of a signal received from a TFT monitor. The representation also corresponds to the variation in light intensity (I) with time (t), showing four cycles of a duration equivalent to the refresh signal period, of which the first two cycles, with a higher level, correspond to the color white and the second two correspond to the color black.

As regards the implementation of the electronic signature it must be considered that currently employed electronic signature systems use public key encryption, which implies the need to be able to restore the signed message from the encrypted data with the public key. This means that the size of the encrypted data must be at least equal to the size of the signed data, as otherwise information would be lost in the signing process. Moreover, public key systems currently used generate a signature size equal to that of the keys used to encode and decode the message extract, thereby obtaining a signature of 512, 1024 or 2048 bits. This is a serious problem for the user, who must manually copy this information to the computer with the corresponding effort involved and the high likelihood of making a mistake when copying the data. For this reason, it is convenient to find a system that allows to sign documents with a small size signature, without this reducing the security of the system.

The signature method used with the device described herein also solves this drawback, as it is based on private key encryption, and uses as an electronic signature the first 3 to 6 bits of the data encrypted with the private key, as shown in the schematic representation of Figure 5, where a block (12) represents the data to be signed, a block (13) represents the symmetrical encryption mode using a key (16), and a block (14) represents the result of the encryption, with a striped part on the left of this block indicating the part of the encryption used as a signature. The fact that only one part (15) of the encryption output is used as a signature does not increase the possibility of an attack to the system. On the contrary, all it implies is that a possible attacker will have less information to carry out this attack, whether it is by brute force or by cryptoanalytic methods.

To show the signature on the display (3) it is encrypted by grouping the bits 6 by 6. Six bits generate 64 possible values which are mapped onto the following set: '-', '+', '0' to '9', 'a' to 'z' and 'A' to 'Z' (ASCII table).

Lastly, as regards the implementation of the computer transmission software meant to transmit the data to be signed from the PC to the external signer, it must be possible to synchronize it with the screen refresh cycle of the computer graphics card in order to send one bit of data with each refresh cycle. For this purpose the graphic libraries DirectX (for operative systems such as Windows) and OpenGL (for Unix platforms) are used.

In this sense there are two possible implementations, one as an independent application to implement the transmission system and the entire user interface, and one as a component added to another application (mainly a web surfer), such as ActiveX and plug-ins, so that it is only necessary to implement the key to carry out the data transmission. These components will be provided with a simple interface with a transmission function which receive as parameters the data to be transmitted.

As can be easily understood the device of the invention as described above has an immediate application in e-banking and e-commerce, although it could be used for any system based on electronic signatures which requires a high level of security without implying additional complications for the user, as long as the quantity of data to be signed is relatively small.

It is not considered necessary to extend the contents of this description so that an expert in the field can understand its scope and the advantages derived of the invention, as well as to develop and reduce to practice the object of the invention.

However, it must be understood that the invention has been described in accordance with a preferred embodiment, so that it may be changed without affecting the essence of the invention, such as by changes in its constructive and operational characteristics of the assembly as defined in the accompanying claims.

## Claims

1. External signing device for a PC, comprising an optical data input for receiving data via the monitor screen of the PC, for use in e-banking and e-commerce or in any other system based on electronic signatures which requires a high security with a relatively low quantity of data to be signed, wherein said device includes an optical system (1) for receiving the data from the computer monitor screen (2), an alphanumerical display (3) for displaying the data to be signed, a keyboard (4) for user interaction with the device and a signing system for processing operations of signing the received data, and wherein the alphanumerical display is further adapted to display the signed data.

2. Signing device as claimed in claim 1, wherein an area (6) is defined in the monitor screen (2) for transmitting data to the optical system (1), in which area two sections (6') have been defined, a first one of said two sections being arranged to send the data and a second one of said two sections being arranged to send a synchronization sequence used to distinguish inactive states from transmission of repeated bits, the optical system (1) further incorporating photo-detectors (5) for detecting the signals sent from the sections (6') in correspondence with the illumination changes of the monitor screen.

3. Signing device as claimed in claim 1 or 2, which cannot be re-programmed, and which is activated by entering a personal identification number (PIN).

4. Signing device as claimed in one or more of the previous claims 1 to 3, which is arranged so that it can show the signature on the alphanumerical display (3) so that it can be copied to a destination device, with said signature being generated by an encryption algorithm which uses the same key to sign and to verify said signature, so that the documents to be signed may contain any alphanumerical character and so that the data to be signed can be entered with a keyboard, and so that the user can view all messages in several languages.

5. Signing device as claimed in one or more of the previous claims, having incorporated an abbreviated signature generation algorithm of the symmetrical encryption type, with the same key used to encode and decode, with the signature consisting of a subset of the bits generated by the encryption process, carrying out the signature verification process encrypting the data again and comparing the signature bits with the corresponding ones generated in the verification process, and with the signature encoded as 6-bit subsets so that it can be mapped onto a subset of printable ASCII characters.

6. Signing device as claimed in one or more of the previous claims, wherein one of several currencies can be chosen for the monetary amounts of the documents to be signed, one of several signature keys can be chosen and one of several languages can be chosen for presenting the messages to the user.

## Patentansprüche

1. Externe Unterschrifteneinheit für einen PC, die einen optischen Datainput zum Erhalten der Daten durch den Bildschirm des PCs umfasst, zum Gebrauch beim E-Banking, E-Commerce oder jedem anderen System, das auf einer elektronischen Unterschrift basiert, das hohe Sicherheit bei relativ geringer zu unterschreibender Datenmenge verlangt, wobei besagte Einheit ein optisches System (1) umfasst, um die Daten vom Bildschirm des Computers (2) zu erhalten, ein alphanummerisches Display (3), um die zu unterschreibenden Daten anzuzeigen, eine Tastatur (4) für die Interaktion des Users mit der Einheit und ein Unterschriftensystem, um die Operation des Unterschreibens der erhaltenen Daten zu verarbeiten und für das das alphanummerische Display angepasst ist, um die unterschriebenen Daten anzuzeigen.

2. Unterschrifteneinheit wie in Anspruch 1 beansprucht, wobei ein Bereich (6) auf dem Bildschirm (2) definiert ist, um die Daten an das optische System (1) zu übertragen, wobei in diesem Bereich zwei Abschnitte (6') definiert sind, ein erster, der dazu ausgelegt ist, die Daten zu senden und ein zweiter der besagten Abschnitte so ausgelegt ist, das ser eine Synchronisationsequenz sendet, die verwendet wird, um inaktive Zustände von der Übertragung wiederholter Bits zu unterscheiden, wobei das optische System (1) weiterhin Photodetektoren (5) umfasst, um Signale zu erkennen, die von den Abschnitten (6') gesendet werden, in Übereinstimmung mit dem Wechsel der Beleuchtung des Bildschirms.

3. Unterschriftensystem wie in Anspruch 1 oder 2 beansprucht, das nicht neuprogrammiert werden kann und das durch die Eingabe einer persönlichen Identifikationsnummer (PIN) aktiviert wird.

4. Unterschriftensystem wie in einem oder mehreren der vorangegangenen Ansprüche 1 bis 3 beansprucht, das so ausgelegt ist, dass die Unterschrift auf dem alphanummerischen Display (3) angezeigt werden kann, so dass sie in eine Zieleinheit kopiert werden kann, wobei die besagte Unterschrift durch einen Verschlüsselungsalgorythmus hervorgebracht wird, der die selbe Verschlüsselung für die Unterschrift verwendet und die besagte Unterschrift überprüft, so dass die zu unterschreibenden Dokumente jedes alphanummerische Zeichen enthalten kann und so, dass die zu unterschreibenden Daten mit der Tastatur eingegeben werden können und so, dass der User alle Nachrichten in verschiedenen Sprachen sehen kann.

5. Unterschrifteneinheit wie in einem oder mehreren der vorangegangenen Ansprüche beansprucht, das einen verkürzten Unterschriftenerstellungsalgorythmus mit symmetrischer Verschlüsselung umfasst, wobei der selbe Schlüssel zum kodieren und dekodieren verwendet wird und die Unterschrift in einer Untermenge der durch den Verschlüsselungsprozess entstandenen Bits besteht und das Unterschriftenüberprüfungsverfahren durchgeführt wird, indem die Daten wieder verschlüsselt werden und mit den Unterschriftenbits mit den im Überprüfungsverfahren erstellten verglichen werden und die Unterschrift in einer 6-Bit-Untermenge kodiert wird, so dass sie als eine Untergruppe von druckbaren ASCII-Zeichen entschlüsselt werden kann.

6. Unterschrifteneinheit wie in einem oder mehreren der vorangegangenen Ansprüche beansprucht, bei dem eine von mehreren Währungen von für den Geldbetrag gewählt wrden können, der unterschrieben werden soll, einer von verschiedenen Unterschriftenschlüsseln gewählt werden kann und eine von verschiedenen Sprachen gewählt werden kann, um dem User die Nachrichten anzuzeigen.

## Revendications

1. Dispositif de signature externe pour ordinateur personnel, comprenant une entrée optique de données pour recevoir des données via l'écran de moniteur de l'ordinateur personnel pour son utilisation en banque électronique ou commerce électronique, ou dans tout autre système basé sur des signatures électroniques nécessitant d'une sécurité élevée avec une quantité relativement faible de données à signer, dans lequel ledit dispositif inclut un système optique (1) pour recevoir les données de l'écran de moniteur de l'ordinateur (2), un écran d'affichage alphanumérique (3) pour afficher les données à signer, un clavier (4) pour l'interaction de l'utilisateur avec le dispositif et un système de signature pour traiter les opérations de signature et les données reçues, et dans lequel l'écran d'affichage alphanumérique est adapté, en outre, pour afficher les données signées

2. Dispositif de signature selon la revendication 1, dans lequel on définit une zone (6) dans l'écran du moniteur (2) pour transmettre des données au système optique (1), dans la zone duquel on a défini deux sections (6'), une première desdites deux sections étant aménagée pour envoyer des donnés et une deuxième desdites deux sections étant aménagée pour envoyer une séquence de synchronisation usée para distinguer les états inactifs de la transmission de bits répétés, le système optique (1), incorporant, en outre, des photocapteurs (5) pour détecter les signaux envoyés depuis les sections (6') en correspondance avec les changements d'illumination de l'écran de moniteur.

3. Dispositif de signature selon la revendication 1 ou 2 ne pouvant pas se reprogrammer, et qui s'active en introduisant un numéro d'identification personnel (PIN).

4. Dispositif de signature selon une ou plusieurs des revendications précédentes 1 à 3, qui est aménagé de manière à pouvoir afficher la signature sur l'écran d'affichage alphanumérique (3) de manière à pouvoir être copiée dans un dispositif de destination, ladite signature étant générée par un algorithme de cryptage qui utilise la même clef pour signer et pour vérifier ladite signature, de manière que les documents à signer puissent contenir n'importe quel caractère alphanumérique, et de manière que les données à signer puissent être introduites au moyen d'un clavier, et de manière que l'utilisateur puisse voir tous les messages en plusieurs langues.

5. Dispositif selon une ou plusieurs des revendications précédentes, qui incorpore un algorithme abrégé de génération de signature du type de cryptage symétrique, avec la même clef utilisée pour coder et décoder, la signature consistant en un sous-ensemble des bits générés par le procédé de cryptage, le procédé de vérification de la signature étant réalisé en cryptant de nouveau les données et en comparant les bits de la signature avec les données correspondantes générées lors du procédé de vérification, et avec la signature codée sous forme de sous-ensembles de 6 bits pour ainsi pouvoir être cartographiée sur un sous-ensemble de caractères ASCII imprimables.

6. Dispositif de signature selon une ou plusieurs des revendications précédentes, dans lequel on peut choisir diverses devises pour les quantités monétaires des documents à signer, on peut choisir une des diverses clefs de signature et on peut choisir une des diverses langues pour présenter les messages à l'utilisateur.
